(19) Europäisches Patentamt
European Patent Office
Office européen des brevets

(11) Numéro de publication : **0 281 429 B1**

# (12) FASCICULE DE BREVET EUROPEEN

(45) Date de publication du fascicule du brevet : **13.03.91 Bulletin 91/11**

(51) Int. Cl.$^5$ : **G01M 1/12**

(21) Numéro de dépôt : **88400006.8**

(22) Date de dépôt : **04.01.88**

**(54) Procédé et dispositif pour déterminer le centre de gravité d'un aéronef.**

(30) Priorité : **08.01.87 FR 8700117**

(43) Date de publication de la demande : **07.09.88 Bulletin 88/36**

(45) Mention de la délivrance du brevet : **13.03.91 Bulletin 91/11**

(84) Etats contractants désignés : **DE ES GB IT NL SE**

(56) Documents cités : **FR-A- 2 381 998**

(73) Titulaire : **AEROSPATIALE SOCIETE NATIONALE INDUSTRIELLE Société Anonyme dite: 37, Boulevard de Montmorency F-75016 Paris (FR)**

(72) Inventeur : **Buisson, Dominique 25 Lotissement La Forêt Royale F-31340 Villemur (FR)**
Inventeur : **Irvoas, Joseph 28 rue de la Vieille Eglise F-31270 Cugnaux (FR)**

(74) Mandataire : **Bonnetat, Christian et al CABINET BONNETAT 23, Rue de Léningrad F-75008 Paris (FR)**

EP 0 281 429 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé et un système pour la détermination de la position longitudinale du centre de gravité d'un aéronef pourvu d'un empennage horizontal réglable.

On sait que la méthode généralement utilisée pour déterminer la position longitudinale du centre de gravité d'un avion consiste à peser l'avion au sol, à mesurer les quantités de carburant dans les divers réservoirs, à mesurer ou estimer les chargements en passagers et en frêt et à sommer ces données sur un abaque de masse et centrage. Chacune de ces données doit être reportée en permanence sur ledit abaque pour suivre l'évolution de la position du centre de gravité. Ces opérations sont effectuées soit manuellement, soit à l'aide d'un calculateur qui prend en compte les données de départ et reporte en permanence au cours du vol les variations de masse dues à la diminution et au transfert de carburant.

Cette méthode connue, qui semble être la seule à être utilisée actuellement, donne de bons résultats dans la mesure où toutes les données entrées sont correctes, où les transferts reportés l'ont été correctement et où il n'y a pas eu d'aléas de fonctionnement dans les divers systèmes de transfert, de mesure ou de calcul.

Cependant, elle ne permet pas de faire une remise à zéro en vol pour déclencher un nouveau processus de mesure, dans le cas où un des éléments ayant été utilisé pour obtenir la mesure serait mis en doute. Ce défaut est inhérent à tout système se référant à des données intégrées depuis les mesures au sol.

Cette méthode connue est donc limitée en fiabilité et surtout en sécurité.

Jusqu'à présent, pour les avions gros porteurs, cet inconvénient n'était guère gênant et seuls la mesure et les calculs au sol, avant décollage, étaient importants.

En effet de tels avions ne pouvaient se trouver que dans une configuration stable, c'est-à-dire qu'en aucun cas le centre de gravité ne risquait de se trouver en arrière du point de manoeuvre, à leur départ ; de plus, ces avions ne pouvaient, en vol, s'écarter dangereusement de cette configuration de stabilité, ceci grâce à la situation des différents réservoirs et à leurs séquences de remplissage et de vidage étudiées de façon que l'avion en vol reste dans les limites certifiées de centrage.

Sur l'avion supersonique CONCORDE, le problème s'est cependant posé et a été résolu de manière classique grâce à des calculateurs et à des systèmes d'alarmes redondants. En effet, pour conserver l'avion facilement manoeuvrable en vol supersonique, et donc maintenir une faible distance entre le centre de gravité et le point de manoeuvre (défini comme le point où la gouverne de profondeur a une efficacité infinie sur le facteur de charge de l'avion), on effectue des transferts de carburant vers l'arrière au moment du passage en vol supersonique; et, inversement, au retour en vol subsonique, un transfert inverse est effectué pour ne pas risquer l'instabilité. Cependant, dans ce cas particulier, étant donné l'opération effectuée (transfert de carburant en une seule opération), le système n'est guère complexe.

De même, sur l'avion gros porteur AIRBUS A 310-300, qui possède un empennage horizontal réglable, un réservoir de carburant supplémentaire est installé dans ledit empennage horizontal réglable, afin d'augmenter le rayon d'action et d'améliorer les performances par déplacement du centre de gravité vers l'arrière.

Dans ce cas, pour effectuer le calcul de la position longitudinale du centre de gravité et contrôler le transfert de carburant de façon à conserver minimale la distance entre le centre de gravité et le point de manoeuvre, tout en maintenant la stabilité de l'avion, un calculateur de centrage gère en permanence les transferts de carburant. Ce calculateur utilise la méthode connue, rappelée ci-dessus, basée sur la sommation des données.

Par ailleurs, on sait que la technique moderne de construction des avions évolue vers la réalisation d'avions à stabilité artificielle, c'est-à-dire dans lesquels le centre de gravité se trouve en arrière du point par rapport auquel le moment des forces aérodynamiques est indépendant de l'incidence, ce qui nécessite d'effectuer en permanence des corrections en agissant sur la gouverne de profondeur à une fréquence élevée.

Dans de tels avions à stabilité artificielle, le problème de la détermination de la position du centre de gravité se pose donc avec acuité, car cette position doit être connue de façon fiable et précise pour pouvoir être contrôlée en permanence, afin d'assurer la sécurité de vol de ces avions.

La présente invention a pour objet un procédé de détermination fiable et précis de la position longitudinale du centre de gravité d'un aéronef, remédiant aux inconvénients de la méthode connue rappelée ci-dessus.

A cette fin, selon l'invention, le procédé pour la détermination de la position longitudinale du centre de gravité d'un aéronef pourvu d'un empennage horizontal réglable, est remarquable en ce que, à un point de vol pour lequel ledit aéronef est en équilibre avec sa gouverne de profondeur en prolongement aérodynamique dudit empennage horizontal réglable, on calcule ladite position du centre de gravité à partir :

– de la position du foyer dudit aéronef ;
– de la mesure du braquage dudit empennage horizontal réglable ;
– d'une première fonction du régime des moteurs de l'aéronef et du nombre de Mach, cette première fonction étant représentative de la valeur du braquage dudit empennage horizontal réglable, dans le cas où ledit centre de gravité se trouverait au foyer dudit aéronef ; et

– d'une seconde fonction du coefficient de portance dudit aéronef et dudit nombre de Mach, cette seconde fonction étant représentative de l'écart de braquage dudit empennage horizontal pour un écart de 1% de la position du centre de gravité.

Comme on le verra plus en détail ci-après, la présente invention met à profit le fait que le braquage de l'empennage horizontal réglable, lorsque l'avion est trimmé, c'est-à-dire lorsque l'équilibre en moment de tangage est réalisé et que la gouverne de profondeur présente un braquage nul par rapport audit empennage, est une fonction des conditions de vol et de la position du centre de gravité de l'avion. La présente invention exploite de manière particulière les lois de la mécanique du vol, et notamment l'équation du moment du tangage de l'aéronef autour du centre de gravité de celui-ci.

Ainsi, dans le procédé conforme à l'invention, on détermine la position longitudinale du centre de gravité de l'aéronef uniquement à partir d'une donnée structurelle de l'aéronef (position du foyer), à partir de données (nombre de Mach, régime des moteurs et coefficient de portance) mesurées en vol et d'ailleurs déjà traitées ou élaborées par les systèmes de l'aéronef pour d'autres fins et donc déjà disponibles, et à partir de la mesure du braquage de l'empennage horizontal réglable.

Comme cela sera démontré ci-après, le procédé de l'invention met avantageusement en oeuvre l'équation suivante :

$$x_G = x_F + \frac{iH - K(M, N1)}{H(Cz, M)}$$

dans laquelle :

– $x_G$ est l'abscisse de la position effective du centre de gravité G, mesurée le long de l'axe longitudinal de l'aéronef à partir d'une origine de référence et rapportée à la corde aérodynamique moyenne (généralement désignée par MAC) de la voilure principale dudit aéronef ;

– $x_F$ est l'abscisse de la position du centre de gravité G pour laquelle le coefficient de portance de l'aéronef n'a pas d'influence sur le braquage d'équilibre de l'empennage horizontal réglable, c'est-à-dire la position pour laquelle ledit centre de gravité se trouve au foyer de l'aéronef complet, cette abscisse étant mesurée le long de l'axe longitudinal de l'aéronef à partir de ladite origine de référence et étant également rapportée à ladite corde aérodynamique moyenne ;

– iH est la mesure, au point de vol considéré, du braquage réel de l'empennage horizontal réglable pour l'aéronef trimmé ;

– K(M, N1) est la première fonction du régime N1 des moteurs de l'aéronef et du nombre de Mach M au point de vol considéré ; et

– H(Cz, M) est la seconde fonction du coefficient de portance Cz de l'aéronef et du nombre de Mach M audit point de vol.

Les fonctions K(M, N1) et H(Cz, M) sont liées à la géométrie de l'aéronef et de ses moteurs. Elles peuvent se présenter chacune sous la forme d'une table à deux entrées – l'entrée du paramètre M et l'entrée du paramètre N1 pour la fonction K(M, N1) et l'entrée du paramètre Cz et l'entrée du paramètre M pour la fonction H(Cz, M) – et à une sortie donnant la valeur de la fonction correspondante pour des couples de valeurs particulières desdits paramètres d'entrée. Lesdites fonctions peuvent être déterminées soit par le calcul, soit à partir d'essais en vol et/ou en soufflerie.

La première fonction K(M, N1), qui, comme on l'a indiqué ci-dessus, est représentative de la valeur du braquage dudit empennage horizontal réglable dans le cas où le centre de gravité se trouverait au foyer, peut avantageusement se présenter sous la combinaison de trois fonctions, d'une seule variable chacune, par exemple du type :

$$K(M, N1) = F(M) + G1(N1) \cdot G2(M)$$

dans lequel :

– F(M) est une fonction du seul nombre de Mach M, représentative de l'aérodynamique de l'aéronef ;

– G1(N1) est une fonction du seul régime moteur N1, et

– G2(M) est une fonction du seul nombre de Mach M, représentative du moment de tangage dû à la poussée des moteurs.

Ainsi, dans la composition de la fonction K(M, N1), on dissocie l'influence de la géométrie de l'aéronef de l'influence globale de ses moteurs.

De même, il peut être avantageux que la seconde fonction H(Cz, M), représentative de l'écart de braquage de l'empennage horizontal réglable pour un écart de 1% de la position du centre de gravité se présente sous la forme de la combinaison de deux fonctions H1(M) et H2(Cz), d'une seule variable chacune.

Ainsi, pour connaître la valeur desdites première et seconde fonctions au point de vol considéré, il est nécessaire de connaître la valeur correspondante de chacun des trois paramètres que sont le nombre de Mach M, le régime des moteurs N1 et le coefficient de portance Cz.

Le nombre de Mach peut par exemple être fourni par le calculateur de bord ADC (Air Data Computer), tandis que le régime des moteurs est directement délivré par le dispositif de contrôle associé à ceux-ci.

Pour connaître la valeur du coefficient de portance Cz, on peut utiliser la loi liant celui-ci au nombre de Mach et à l'incidence de l'avion. Dans ce cas, en plus de la mesure de M, il est donc nécessaire de mesurer ladite incidence. On peut également utiliser les paramètres que sont la masse m de l'avion (donnée par exemple par le système FMS-Flight Management System) et la pression dynamique Pd (donnée par le calculateur ADC). Dans ce dernier cas, le coefficient de portance Cz est calculé par la formule :

$$Cz = \frac{m.g}{S.Pd}$$

dans laquelle g est l'accélération de la pesanteur et S la surface de référence de l'aéronef.

Le procédé conforme à l'invention permet donc de calculer la position du centre de gravité de l'aéronef en vol indépendamment des mesures faites au sol et uniquement à partir de paramètres déjà élaborés, à l'exception de la mesure de braquage de l'empennage horizontal réglable qui nécessite un système classique de mesure d'angle.

Un système mettant en oeuvre ce procédé peut ainsi fournir une indication de la position du centre de gravité, qui peut être présentée directement sous forme visuelle, par exemple sur des tubes cathodiques, ou être utilisée dans des calculateurs, soit pour l'élaboration de fonctions particulières où la prise en compte du centrage est nécessaire, soit pour la vérification de fonctions élaborées par des voies différentes.

Un tel système peut en particulier être utilisé pour vérifier des résultats obtenus par une autre méthode ou détecter une position limite, extrême, et déclencher un système d'alarme.

Aussi, selon la présente invention, un système pour la détermination de la position longitudinale du centre de gravité d'un aéronef pourvu d'un empennage horizontal réglable selon le procédé défini ci-dessus, est remarquable :

– en ce qu'il comporte :

- un calculateur ;
- un capteur de position angulaire associé audit empennage horizontal réglable ;
- un premier dispositif susceptible de délivrer des informations représentatives du régime des moteurs de l'aéronef ;
- un second dispositif susceptible de délivrer des informations représentatives du nombre de Mach ;
- un troisième dispositif susceptible de délivrer des informations représentatives du coefficient de portance de l'aéronef ;
- des premiers moyens de mémoire dans lesquels est emmagasinée ladite première fonction, lesdits premiers moyens de mémoire recevant les informations délivrées par lesdits premier et second dispositifs et délivrant à leur sortie les valeurs correspondantes de ladite première fonction ;
- des seconds moyens de mémoire dans lesquels est emmagasinée ladite seconde fonction, lesdits seconds moyens de mémoire recevant les informations délivrées par lesdits second et troisième dispositifs et délivrant à leur sortie les valeurs correspondantes de ladite seconde fonction ;

– et en ce que ledit calculateur reçoit des informations sur la position du foyer de l'aéronef en plus des informations délivrées par lesdits premiers et seconds moyens de mémoire ainsi que de celles délivrées par ledit capteur de position angulaire.

Selon un premier mode de réalisation de ce système, ledit troisième dispositif comporte une sonde de détection de l'incidence de l'aéronef, ainsi que des troisièmes moyens de mémoire dans lesquels est emmagasinée une fonction liant ledit coefficient de portance de l'aéronef à ladite incidence et au nombre de Mach, lesdits troisièmes moyens de mémoire recevant les informations délivrées par ledit second dispositif et par ladite sonde et délivrant à leur sortie les valeurs correspondantes dudit coefficient de portance.

Dans une variante de réalisation, ledit troisième dispositif comporte des moyens de calcul recevant des informations sur la masse de l'aéronef, sur la pression dynamique, sur la valeur de l'accélération de la pesanteur et sur la valeur de la surface de référence de l'aéronef et calculant ledit coefficient de portance.

Les figures du dessin annexé feront bien comprendre comment l'invention peut être réalisée. Sur ces figures, des références identiques désignent des éléments semblables.

La figure 1 représente schématiquement un avion gros porteur et le système des forces intervenant dans l'équilibre en moment de tangage.

La figure 2 donne le schéma synoptique d'un mode de réalisation du dispositif selon l'invention.

Les figures 3, 4 et 5 indiquent les composantes de ladite première fonction.

La figure 6 illustre un abaque représentatif de ladite seconde fonction.

La figure 7 illustre un premier mode de réalisation du dispositif engendrant le coefficient de portance.

La figure 8 est un abaque illustrant le fonctionnement du dispositif de la figure 7.

La figure 9 illustre un second mode de réalisation du dispositif engendrant le coefficient de portance.

L'avion gros porteur 1, représenté sur la figure 1, présente un axe longitudinal L-L et comporte une voilure principale 2 supportant des moteurs 3 et un empennage horizontal réglable 4, souvent appelé plan horizontal réglable et désigné par l'abréviation PHR. Lorsque cet avion n'est soumis à aucun mouvement de roulis ou de giration, il subit essentiellement l'action des forces suivantes :

– son poids P, appliqué au centre de gravité G et bien entendu dirigé vers le bas ;

– la portance aérodynamique Za, de l'avion complet, appliquée au foyer F et dirigée vers le haut ;

– la trainée aérodynamique Xa, de l'avion complet, appliquée au foyer F et dirigée vers l'arrière ;

– la poussée T des moteurs 3 parallèle à l'axe L-L, dirigée vers l'avant et appliquée en un point dont la distance audit axe L-L est égale à $\Delta z$ ; et

– la déportance aérodynamique Zh, dirigée vers le bas, de l'empennage horizontal réglable 4, braqué d'un angle iH par rapport à l'axe L-L.

Le poids P étant appliqué au centre de gravité G, son moment par rapport à ce dernier est nul. Par ailleurs, la distance séparant le foyer F de l'axe L-L étant généralement très faible (au point de considérer que ledit foyer F se trouve sur l'axe L-L) le bras de levier de la trainée aérodynamique Xa par rapport au centre de gravité G est nul, de sorte que le moment de ladite trainée aérodynamique Xa par rapport au centre de gravité G est également nul.

Par suite, on peut considérer avec une bonne approximation que le moment de tangage résultant autour du centre de gravité G comporte les composantes suivantes :

– un moment M1, engendré par la poussée T des moteurs 3 et égal au produit $T \cdot \Delta z$ ;

– un moment M2, engendré par la portance aérodynamique Za ; et

– un moment M3, engendré par la déportance aérodynamique Zh.

A ces trois composantes, doit en être ajoutée une quatrième M4, correspondant au tangage aérodynamique pour une portance nulle et un braquage iH de l'empennage 4 également nul. On définit à cet effet un coefficient de moment de tangage aérodynamique pour une portance nulle et un braquage iH nul, ce coefficient étant désigné par Cmo.

Si l'on désigne par S la surface de référence de la voilure, par l la corde de référence (ou corde aérodynamique moyenne) de la voilure et par Pd la pression dynamique au point de vol considéré, le moment M4 est égal au produit $S \cdot Pd \cdot l \cdot Cmo$. On remarquera que si, comme cela est usuel, on choisit sur l'axe L-L une origine 0 et que l'on exprime les abscisses $x_G$ et $x_F$ des points G et F (celui-ci étant supposé sur l'axe L-L) en % de ladite corde de référence l, le moment M2 est égal au produit $Za \cdot (x_G - x_F) \cdot l$.

Par ailleurs, si on appelle Z&h le gradient de déportance de l'empennage horizontal 4 correspondant à l'incidence locale de l'empennage 4, le moment M3 est égale au produit $Z\alpha h \cdot iH \cdot l$.

Lorsque l'avion 1 est trimmé, c'est-à-dire lorsque l'équilibre en moment de tangage est réalisé et que la gouverne de profondeur 5, portée par le bord de fuite de l'empennage 4 est en prolongement aérodynamique dudit empennage (braquage nul), l'équilibre en moment de tangage s'écrit :

$$(1)\ M1 + M2 + M3 + M4 = 0$$

En remplaçant, dans cette équation (1), les différents moments M1, M2, M3 et M4 par les valeurs indiquées ci-dessus, on obtient donc :

$$(2)\ T \cdot \Delta z + Za \cdot (x_G - x_F) \cdot l + Z\alpha h \cdot iH \cdot l + S \cdot Pd \cdot l \cdot Cmo = 0$$

On remarquera que si on appelle Cz le coefficient de portance de l'avion complet et $Cz\alpha h$ le coefficient du gradient de déportance de l'empennage 4, on peut écrire :

$$(3)\ Za = -S \cdot Pd \cdot Cz \text{ et}$$
$$(4)\ Z\alpha h = S \cdot Pd \cdot Cz\alpha h$$

Par suite, l'équation (2) peut s'écrire

$$(5)\ T \cdot \Delta z + S \cdot Pd \cdot l\,[-Cz(x_G - x_F) + Cz\alpha h \cdot iH + Cmo] = 0$$

Si on appelle iHRef la valeur particulière du braquage iH correspondant à l'équilibre lorsque les points G et F sont confondus, on obtient :

$$(6)\ T \cdot \Delta z + S \cdot Pd \cdot l\,[Cz\alpha h \cdot iH\,Ref + Cmo] = 0$$

Des équations (5) et (6), on peut en déduire :

$$(7)\ x_G - x_F = \frac{iH - iHRef}{\frac{Cz}{Cz\alpha h}}$$

On remarquera que le rapport $\frac{Cz}{Cz\alpha h}$ correspond à la valeur de l'écart de braquage iH-iHRef pour laquelle $x_G - x_F = 1\%$. Par ailleurs, puisque de façon connue l'efficacité du braquage de l'empennage 4 dépend des conditions de vol et, plus particulièrement, du nombre de Mach M, ce rapport peut être considéré comme une fonction H dépendant des deux paramètres Cz et M et désignée ci-après par H(Cz, M).

Ainsi, on peut écrire :

$$(8)\ x_G = x_F + \frac{iH - iH\ Ref}{H(Cz, M)}$$

De plus, de l'équation (6), on voit que iHRef

dépend de T, c'est-à-dire du régime N1 des moteurs, et de $Cz\alpha h$ et de Cmo, c'est-à-dire du nombre de Mach M. Le paramètre iHRef peut donc être considéré comme une fonction dépendant des paramètres N1 et M. Une telle fonction peut par exemple s'écrire sous la forme :

(9) iHRef = F(M) + G1(N1) · G2(M)

dans laquelle F(M) représente $\frac{Cmo}{Cz\alpha h}$, et G1(N1) · G2(M) représente

$$\frac{T\,\Delta z}{S.Pd.1.Cz\alpha h}$$

Pour la mise en oeuvre de la présente invention, on prévoit un système, qui est embarqué à bord de l'avion 1 et dont le schéma synoptique est donné par la figure 2. Ce système comporte un calculateur 6 susceptible d'adresser la position instantanée du centre de gravité G, c'est-à-dire la grandeur calculée $x_G$ définie ci-dessus, à un ou plusieurs afficheurs 7 et/ou à un ou plusieurs utilisateurs 8, tels que par exemple des calculateurs de commande de vol.

Le calculateur 6 reçoit, ou bien a en mémoire, la grandeur $x_F$ qui est une caractéristique de construction de l'avion 1 et qui, comme mentionné ci-dessus, définit la position du foyer F. De plus, un capteur 9 (voir également la figure 1), par exemple du type synchrotransmetteur, détecte la position angulaire de l'empennage réglable 4 et adresse la valeur iH audit calculateur 6.

Audit calculateur 6 sont associées des mémoires 10, 11, 12 et 13 contenant les différentes fonctions utiles au calcul de la grandeur $x_G$. Les mémoires 10, 12 et 13 reçoivent d'un Machmètre ou d'un calculateur ADC 14 la valeur M du nombre de Mach. De plus, la mémoire 13 reçoit d'un dispositif 15 la valeur de Cz. Enfin, la mémoire 11 reçoit d'un capteur ou d'un calculateur 16 associé aux moteurs 3 la valeur du régime N1.

Dans les mémoires 10, 11, 12 et 13 sont respectivement contenues les fonctions F(M), G1(N1), G2(M) et H(Cz, M), qui sont transmises au calculateur 6. Ainsi, celui-ci peut calculer iHRef par l'équation (9) et $x_G$ par l'équation (8).

Sur les figures 3, 4 et 5, on a représenté respectivement des exemples de fonctions F(M), G1(N1) et G2(M) relatives à un avion AIRBUS, type A310. Les fonctions F(M) et G2(M) sont exprimées en degrés d'angle, tandis que la fonction G1(N1) est un nombre sans dimension. On peut voir qu'à toute valeur courante Mj (ou au moins à une pluralité de telles valeurs courantes) du nombre de Mach M correspond une valeur particulière Fj et une valeur particulière G2j des fonctions F(M) et G2(M) et qu'à toute valeur courante N1j (ou au moins à une pluralité de telles valeurs courantes) du régime moteur N1 correspond une valeur particulière G1j de la fonction G1(N1). Ainsi, pour une pluralité de couples de valeurs Mj, N1j, on obtient les valeurs correspondantes de la fonction iHRef qui sont transmises au calculateur 6.

Les fonctions F(M), G1(N1) et G2(M) sont caractéristiques de la géométrie de l'avion 1 et de ses moteurs 3. Elles peuvent être établies par calcul théorique ou bien encore par des mesures.

Il en est de même de la fonction H(Cz, M), dont un exemple est donné par la figure 6, contenue dans la mémoire 13. On peut voir sur cette figure que, à une pluralité de couples de valeurs de M et de Cz, correspondent des valeurs de la fonction H (exprimées en degrés par pour-cents), adressées au calculateur 6.

Ce calculateur 6, à partir de $x_F$, iH, H(Cz, M) et K(M, N1) = iHRef, calcule $x_G$ qu'il adresse aux dispositifs 7 et 8.

Sur la figure 7, on a représenté un premier mode de réalisation du dispositif 15 destiné à délivrer la grandeur Cz. Dans ce mode de réalisation, on utilise l'abaque de la figure 8, caractéristique de l'avion considéré et liant le coefficient de portance Cz, au nombre de Mach M et à l'incidence $\alpha$ de l'avion. Sur la figure 8, on peut voir que pour une pluralité de couples de valeurs des paramètres $\alpha$ et M, on obtient la valeur Cz correspondante. Aussi, le dispositif 15 comporte alors une mémoire 17, dans laquelle est emmagasinée la fonction représentée sur la figure 8. Cette mémoire 17 reçoit le nombre de Mach M du dispositif 14 (Machmètre ou calculateur ADC) et l'incidence $\alpha$ d'une sonde d'incidence 18 (non représentée sur la figure 1). Par suite, la mémoire 17 peut adresser la valeur Cz correspondante à la mémoire 13.

Dans la variante de réalisation de la figure 9, le dispositif 15 comporte un diviseur 19 et un multiplicateur 20. Ce multiplicateur 19 reçoit du système FMS 21 la masse $\underline{m}$ de l'avion 1, qu'il multiplie par le rapport $\frac{g}{S}$ constant, de l'accélération de la pesanteur g par la surface de référence S de l'avion 1. A la sortie du multiplicateur 20 apparaît donc la grandeur $\frac{mg = P}{S = S}$. Cette dernière grandeur est appliquée au diviseur 19, qui par ailleurs reçoit du calculateur ADC 14 la pression dynamique Pd. Par suite, le diviseur 19 peut délivrer à sa sortie, à l'adresse de la mémoire 13, le rapport $\frac{mg}{Pd \cdot S}$ qui est égal à Cz.

## Revendications

1. Procédé pour la détemination de la position longitudinale du centre de gravité (G) d'un aéronef (1) pourvu d'un empennage horizontal réglable (4), caractérisé en ce que, à un point de vol pour lequel ledit aéronef (1) est en équilibre avec sa gouverne de

profondeur (5) en prolongement aérodynamique dudit empennage horizontal réglable (4), on calcule ladite position du centre de gravité à partir :

- de la position ($x_F$) du foyer (F) dudit aéronef (1);
- de la mesure du braquage (iH) dudit empennage horizontal réglable (4) ;
- d'une première fonction K(M, N1) du régime (N1) des moteurs (3) de l'aéronef et du nombre de Mach (M), cette première fonction étant représentative de la valeur du braquage (iHRef) dudit empennage horizontal réglable (4), dans le cas où ledit centre de gravité (G) se trouverait au foyer (F) dudit aéronef ; et
- d'une seconde fonction H(Cz, M) du coefficient de portance (Cz) dudit aéronef et dudit nombre de Mach (M), cette seconde fonction étant représentative de l'écart de braquage dudit empennage horizontal pour un écart de 1% de la position du centre de gravité.

2. Procédé selon la revendication 1, caractérisé en ce qu'il met en oeuvre l'equation suivante :

$$x_G = x_F + \frac{iH - K(M,N1)}{H(Cz,M)}$$

dans laquelle :

- $x_G$ est l'abscisse de la position effective du centre de gravité G, mesurée le long de l'axe longitudinal (L-L) de l'aéronef à partir d'une origine de référence (0) et rapportée à la corde aérodynamique moyenne de la voilure principale dudit aéronef ;
- $x_F$ est l'abscisse de la position du centre de gravité G pour laquelle le coefficient de portance de l'aéronef n'a pas d'influence sur le braquage d'équilibre de l'empennage horizontal réglable, c'est-à-dire la position pour laquelle ledit centre de gravité, se trouve au foyer de l'aéronef complet, cette abscisse étant mesurée le long de l'axe longitudinal (L-L) de l'aéronef à partir de ladite origine de référence (0) et étant également rapportée à ladite corde aérodynamique moyenne ;
- iH est la mesure, au point de vol considéré, du braquage réel de l'empennage horizontal réglable (4) pour l'aéronef trimmé ;
- K(M, N1) est la première fonction du régime (N1) des moteurs (3) de l'aéronef et du nombre de Mach (M) au point de vol considéré ; et
- H(Cz, M) est la seconde fonction du coefficient de portance (Cz) de l'aéronef et du nombre de Mach (M) audit point de vol.

3. Procédé selon l'une des revendications 1 ou 2, caractérisé en ce que ladite première fonction K(M, N1) est une combinaison de fonctions d'une seule variable chacune.

4. Procédé selon l'une des revendications 1 à 3, caractérisé en ce que ladite seconde fonction H(Cz, M) est une combinaison de fonctions d'une seule variable chacune.

5. Procédé selon la revendication 3, caractérisé en ce que la combinaison de fonctions formant ladite première fonction permet de séparer les influences respectives du nombre de Mach sur l'aéronef et sur les moteurs.

6. Système pour la détermination de la position longitudinale du centre de gravité d'un aéronef (1) pourvu d'un empennage horizontal réglable (4), conformément au procédé de l'une ou l'autre des revendications 1 ou 2 caractérisé :

- en ce qu'il comporte :
  - un calculateur (6) ;
  - un capteur de position angulaire (9) associé audit empennage horizontal réglable (4) ;
  - un premier dispositif (16) susceptible de délivrer des informations représentatives du régime des moteurs de l'aéronef ;
  - un second dispositif (14) susceptible de délivrer des informations représentatives du nombre de Mach ;
  - un troisième dispositif (15) susceptible de délivrer des informations représentatives du coefficient de portance de l'aéronef ;
  - des premiers moyens de mémoire (10, 11, 12) dans lesquels est emmagasinée ladite première fonction, lesdits premiers moyens de mémoire recevant les informations délivrées par lesdits premier et second dispositifs (16, 14) et délivrant à leur sortie les valeurs correspondantes de ladite première fonction ;
  - des seconds moyens de mémoire (13) dans lesquels est emmagasinée ladite seconde fonction, lesdits seconds moyens de mémoire recevant les informations délivrées par lesdits second et troisième dispositifs (14, 15) et délivrant à leur sortie les valeurs correspondantes de ladite seconde fonction ;
- et en ce que ledit calculateur (6) reçoit des informations sur la position du foyer de l'aéronef, en plus des informations délivrées par lesdits premiers et seconds moyens de mémoire (10 à 13), ainsi que de celles délivrées par ledit capteur de position angulaire (9).

7. Système selon la revendication 6, caractérisé en ce que ledit troisième dispositif (15) comporte une sonde (18) de détection de l'incidence de l'aéronef, ainsi que des troisièmes moyens de mémoire (17) dans lesquels est emmagasinée une fonction liant ledit coefficient de portance de l'aéronef à ladite incidence et au nombre de Mach, lesdits troisièmes moyens de mémoire (17) recevant les informations délivrées par ledit second dispositif (14) et par ladite sonde (18) et délivrant à leur sortie les valeurs correspondantes dudit coefficient de portance.

8. Système selon la revendication 6, caractérisé en ce qu'il comporte des moyens de calcul (19, 20) recevant des informations sur la masse de l'aéronef, sur la pression dynamique, sur la valeur de l'accélération de la pesanteur et sur la valeur de la surface de référence de l'aéronef et calculant ledit coefficient de portance.

## Ansprüche

1. Verfahren zum Messen, der Längslage des Schwerpunktes (G) eines mit einem regelbaren Höhenleitwerk (4) versehenen Flugzeuges (1), dadurch **gekennzeichnet**, daß an einem Flugpunkt, bei dem sich das Flugzeug (1) mit seinem Tiefenruder (5) in aerodynammischer Verlängerung des regelbaren Höhenleitwerks (4) im Gleichgewicht befindet, die Lage des Schwerpunktes ausgehend von

- der Lage ($x_F$) des aerodynamischen Mittelpunktes (F) des Flugzeuges (1),
- dem Maß des Ruderausschlags (iH) des regelbaren Höhenleitwerks (4),
- einer ersten Funktion k(M, N1) des Betriebszustandes (N1) der Flugzeugmotoren (3) und der Machzahl (M), wobei diese erste Funktion repräsentativ ist für den Wert des Ruderausschlags (iHRef) des regelbaren Höhenleitwerks (4) für den Fall, wenn der Schwerpunkt (G) im aerodynamischen Mittelpunkt (F) des Flugzeuges liegt, und
- einer zweiten Funktion H(Cz, M) der Auftriebszahl (Cz) des Flugzeuges und der Machzal (M) berechnet wird, wobei diese zweite Funktion repräsentativ ist für das Abmaß des Ruderausschlags des regelbaren Höhenleitwerks bei einem Abmaß von 1% von der Lage des Schwerpunkts.

2. Verfahren nach Anspruch 1, dadurch **gekennzeichnet**, daß die folgene Gleichung :

$$x_G = x_F + \frac{iH - K(M,N1)}{H(Cz,\ M)}$$

benutzt wird, worin

- $x_G$ die Abszisse der Istlage des Schwerpunktes G gemessen längs der Längsachse (L-L) des Flugzeuges ausgehend vom Bezugsnullpunkt (0) und berechnet auf die mittlere aerodynamische Flügeltiefe des Haupttragwerkes des Flugzeuges,
- $x_F$ die Abszisse der Lage des Schwerpunktes G, für die die Auftriebszahl des Flugzeuges keinen Einfluß auf den Gleichgewichtsausschlag des regelbaren Höhenleitwerks hat, d.h. diejenge Lage, bei der der Schwerpunkt im aerodynamischen Mittelpunkt des gesammten Flugzeuges liegt, wobei diese Abszisse entlang der Längsachse (L-L) des Flugzeuges ausgehend vom Bezugsnullpunkt (0) gemessen und ebenfalls auf die mittlere aerodynamische Flügeltiefe berechnet wird,
- iH das Maß, zum in Betracht kommenden Flugpunkt, des tatsächlichen Ausschlags des regelbaren Höhenleitwerks (4) für das in Gleichgewichtslage befindliche Flugzeug,
- K(M, N1) die erste Funktion des Betriebszustandes (N1) der Motoren (3) des Flugzeuges und der Machzahl (M) zum in Betracht kommenden Flugpunkt und
- H(Cz, M) die zweite Funktion der Auftriebszahl (Cz) des Flugzeuges und der Machzahl zu diesem Flugpunkt ist.

3. Verfahren nach einem der vorhergehenden Ansprüche 1 oder 2, dadurch **gekennzeichnet**, daß die erste Funktion K(M, N1) eine Funktionsverknüpfung jeweils einer einzelnen Variable ist.

4. Verfahren nach einem der vorhergehenden Ansprüche 1 bis 3, dadurch **gekennzeichnet**, daß die zweite Funktion H(Cz, M) eine Funktionsverknüpfung jeweils einer einzelnen Variable ist.

5. Verfahren nach Anspruch 3, dadurch **gekennzeichnet**, daß durch die die erste Funktion bildende Funktionsverknüpfung ermöglicht wird, die jeweiligen Einflüsse der Machzahl auf das Flugzeug und auf die Motoren zu trennen.

6. Vorrichtung zum Messen der Längsachse des Schwerpunktes eines mit einem regelbaren Höhenleitwerk (4) versehenen Flugzeuges (1) nach dem Verfahren der vorhergehenden Ansprüche 1 oder 2, **gekennzeichnet** durch :

- einen Rechner (6),
- einen dem regelbaren Höhenleitwerk (4) zugeordneten Winkel(lage)sensor (9),
- eine erste Einrichtung (16), durch die für den Betriebszustand der Motoren des Flugzeuges repräsentative Informationen ausgegeben werden können,
- eine zweite Einrichtung (14), durch die für die Machzahl repräsentative Informationen ausgegeben werden können,
- eine dritte Einrichtung (15), durch die für die Auftriebszahl des Flugzeuges repräsentative Informationen ausgegeben werden können,
- erste Speicher (10, 11, 12), in denen die erste Funktion gespeichert ist und die die von der ersten und der zweiten Einrichtung (16 bzw. 14) ausgegebenen Informationen aufnehmen und an ihrem Ausgang Werte ausgeben, die der ersten Funktion entsprechen, und
- zweite Speicher (13), in denen die zweite Funktion gespeichert ist und die die von der zweiten und dritten Einrichtung (14, bzw. 15) ausgegebenen Informationen aufnehmen und an ihrem Ausgang Werte ausgeben, die der zweiten Funktion entsprechen, sowie dadurch **gekennzeichnet**, daß der Rechner (6) Informationen über die Lage des aerodynamischen Mittelpunktes des Flugzeuges und auch Informationen von ersten und zweiten Speichern (10 bis 13) sowie vom Winkel(lage)sensor (9) ausgegebene Informationen aufnimmt.

7. Vorrichtung nach Anspruch 6, dadurch **gekennzeichnet**, daß die dritte Einrichtung (15) eine Sonde (18) zum Erfassen des Anstellwinkels des Flugzeuges sowie dritte Speicher (17) aufweist, in denen eine Funktion gespeichert ist, durch die die Auftriebszahl des Flugzeuges mit dem Anstellwinkel und der Machzahl verknüpft wird, wobei die Speicher (17) die von der zweiten Einrichtung (14) und der Sonde (18) ausgegebenen Informationen aufnehmen und an ihrem Ausgang der Auftriebszahl entsprechende Werte ausgeben.

8. Vorrichtung nach Anspruch 6, dadurch **gekennzeichnet**, daß sie Recheneinrichtungen (19, 20) aufweist, von denen Informationen über die Masse des Flugzeuges, über den Staudruck, über den Wert der Schwerebeschleunigung sowie über den Wert der Bezugsfläche des Flugzeuges aufgenommen und die Auftriebszahl berechnet werden.

## Claims

1. Process for determining the longitudinal position of the centre of gravity (G) of an aircraft (1) provided with an adjustable horizontal stabilizer (4), characterized in that, at a point of flight for which said aircraft (1) is in equilibrium with its elevator (5) in aerodynamic extension of said adjustable horizontal stabilizer (4), said position of the centre of gravity is calculated from :

- the position ($x_F$) of the focus (F) of said aircraft (1) ;
- the measurement of the deflection (iH) of said adjustable horizontal stabilizer (4) ;
- a first function K(M, N1) of the speed (N1) of the engines (3) of the aircraft and the Mach number (M), this first function being representative of the value of the deflection (iHRef) of said adjustable horizontal stabilizer (4), in the case of said centre of gravity (G) lying at the focus (F) of said aircraft; and
- a second function H(Cz, M) of the coefficient of lift (Cz) of said aircraft and said Mach number (M), this second function being representative of the deviation of deflection of said horizontal stabilizer for a deviation of 1% from the position of the centre of gravity.

2. Process according to Claim 1, characterized in that it employs the following equation :

$$x_G = x_F + \frac{iH - K(M,N1)}{H(Cz,M)}$$

in which :

- $x_G$ is the abscissa of the effective position of the centre of gravity G, measured along the longitudinal axis (L-L) of the aircraft from a reference origin (0)and referred to the mean aerodynamic chord of the principal wing unit of said aircraft ;
- $x_F$ is the abscissa of the position of the centre of gravity G for which the coefficient of lift of the aircraft has no influence on the deflection of equilibrium of the adjustable horizontal stabilizer, i.e. the position for which said centre of gravity lies at the focus of the complete aircraft, this abscissa being measured along the longitudinal axis (L-L) of the aircraft from said reference origin (0) and likewise being referred to said mean aerodynamic chord ;
- iH is the measurement, at the point of flight considered, of the real deflection of the adjustable horizontal stabilizer (4) for the trimmed aircraft ;
- K(M, N1) is the first function of the speed (N1) of the engines (3) of the aircraft and the Mach number (M) at the point of flight considered ; and
- H(Cz, M) is the second function of the coefficient of lift (Cz) of the aircraft and the Mach number (M) at said point of flight.

3. Process according to one of Claims 1 or 2, characterized in that said first function K(M, N1) is a combination of functions each of one sole variable.

4. Process according to one of Claims 1 to 3, characterized in that said second function H(Cz, M) is a combination of functions each of one sole variable.

5. Process according to Claim 3, characterized in that the combination of functions forming said first function makes it possible to separate the respective influences of the Mach number on the aircraft and on the engines.

6. System for determining the longitudinal position of the centre of gravity of an aircraft (1) provided with an adjustable horizontal stabilizer (4), according to the process of one or the other of Claims 1 or 2, characterized :

- in that it comprises :
- • a computer (6),
- • an angular position sensor (9) associated with said adjustable horizontal stabilizer (4) ;
- • a first device (16) capable of delivering information representative of the speed of the engines of the aircraft ;
- • a second device (14) capable of delivering information representative of the Mach number ;
- • a third device (15) capable of delivering information representative of the coefficient of lift of the aircraft ;
- • first memory means (10, 11, 12) in which is

stored said first function, said first memory means receiving the information delivered by said first and second devices (16, 14) and delivering at their output the corresponding values of said first function ;

• second memory means (13) in which is stored said second function, said second memory means receiving the information delivered by said second and third devices (14, 15) and delivering at their output the corresponding values of said second function ;

– and in that said computer (6) receives information on the position of the focus of the aircraft in addition to the information delivered by said first and second memory means (10 to 13) as well as that delivered by said angular position sensor (9).

7. System according to Claim 6, characterized in that said third device (15) comprises a probe (18) for detecting the angle of incidence of the aircraft, as well as third memory means (17) in which is stored a function linking said coefficient of lift of the aircraft with said angle of incidence and with the Mach number, said third memory means (17) receiving the information delivered by said second device (14) and by said probe (18) and delivering at their output the corresponding values of said coefficient of lift.

8. System according to Claim 6, characterized in that it comprises calculating means (19, 20) receiving information on the mass of the aircraft, the dynamic pressure, the value of acceleration of the gravity and the value of the reference surface of the aircraft and calculating said coefficient of lift.

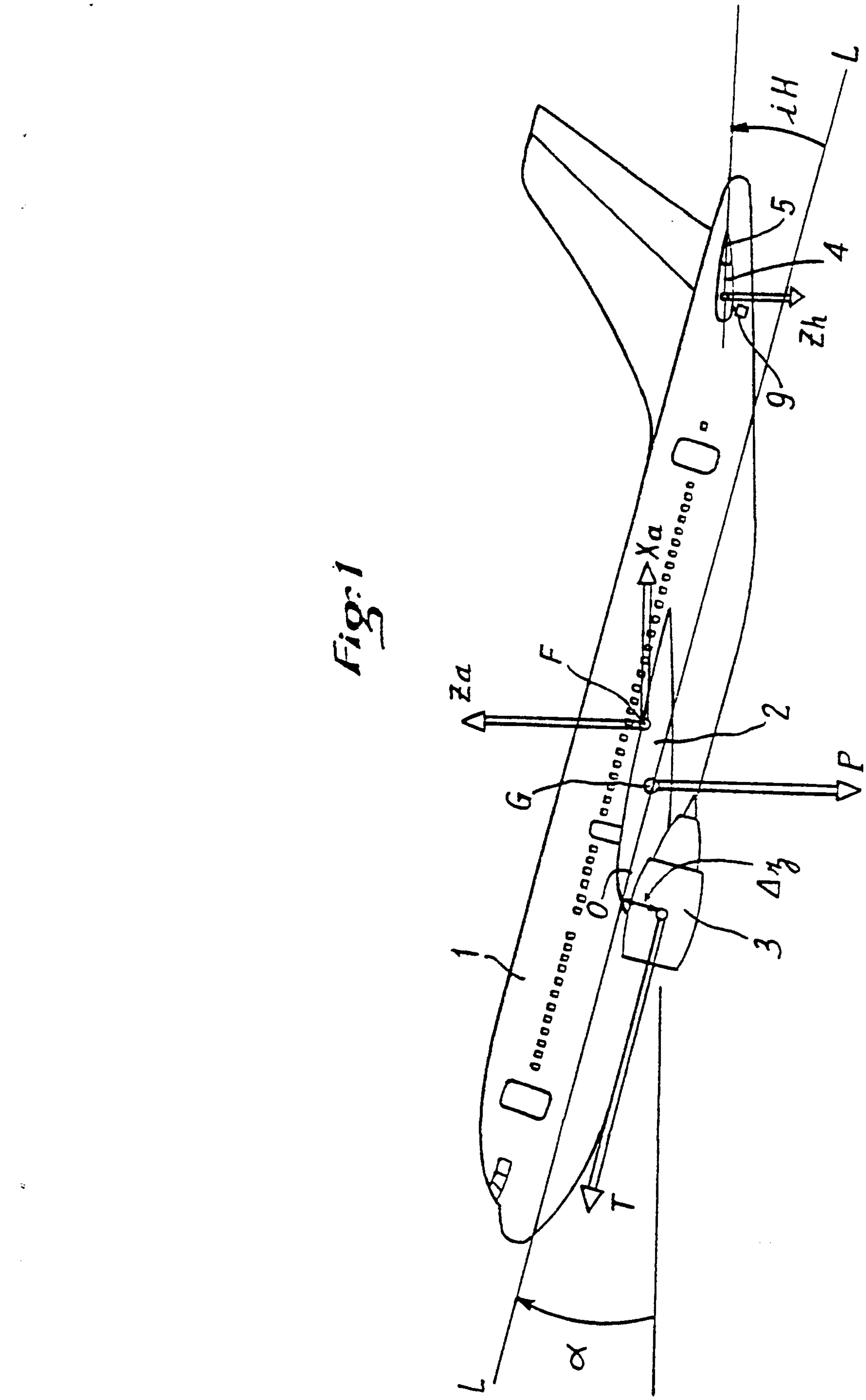
Fig: 1
Za
F
Xa
2
G
P
0
3
1
T
α
L
L
iH
5
4
Zh
9

Fig: 2

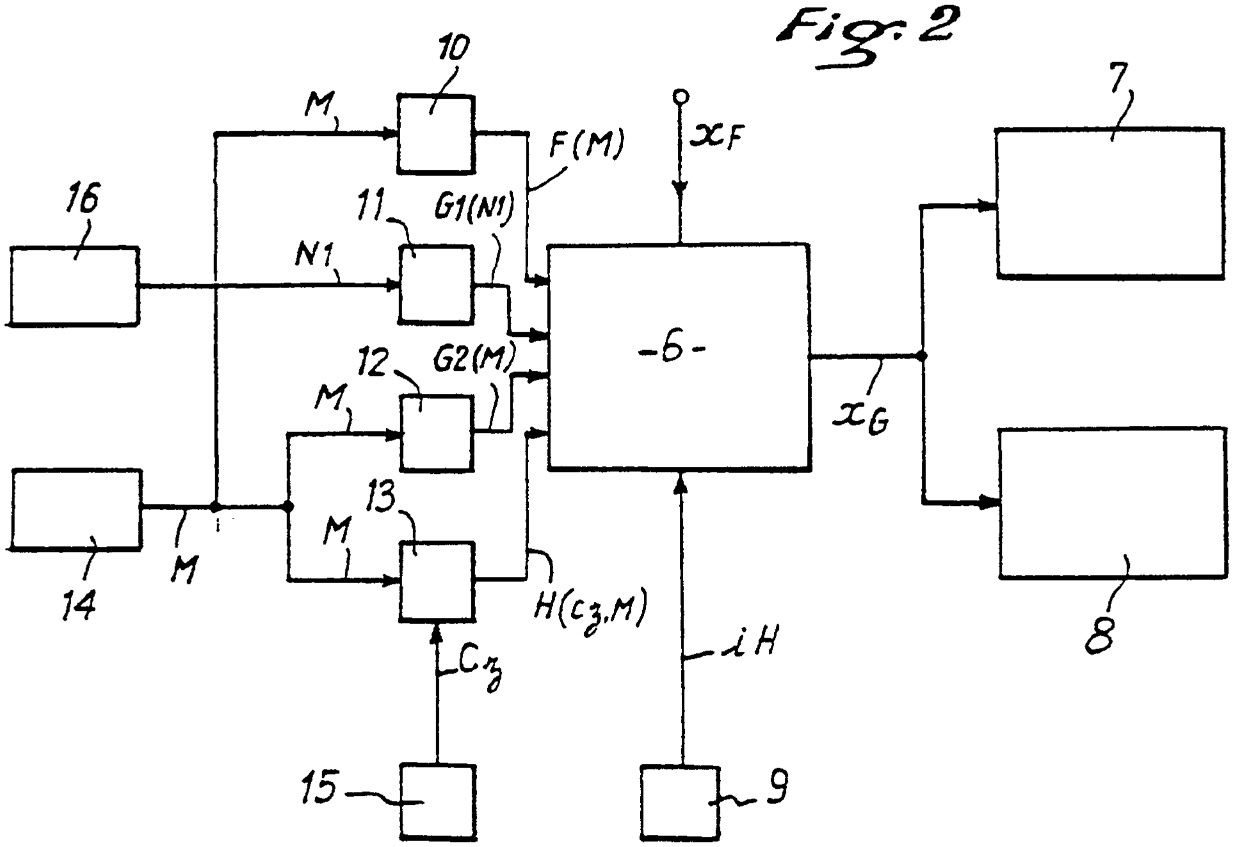


Fig: 7

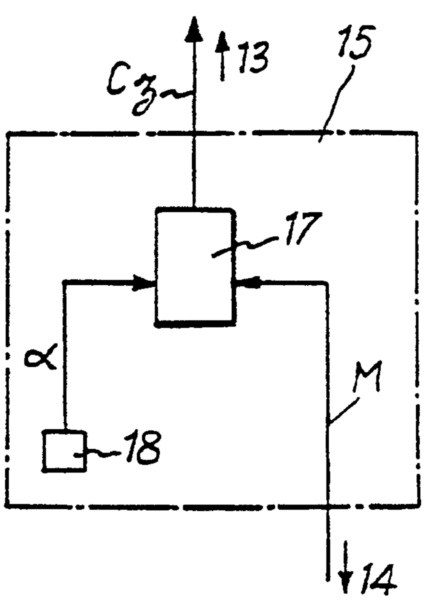


Fig: 9

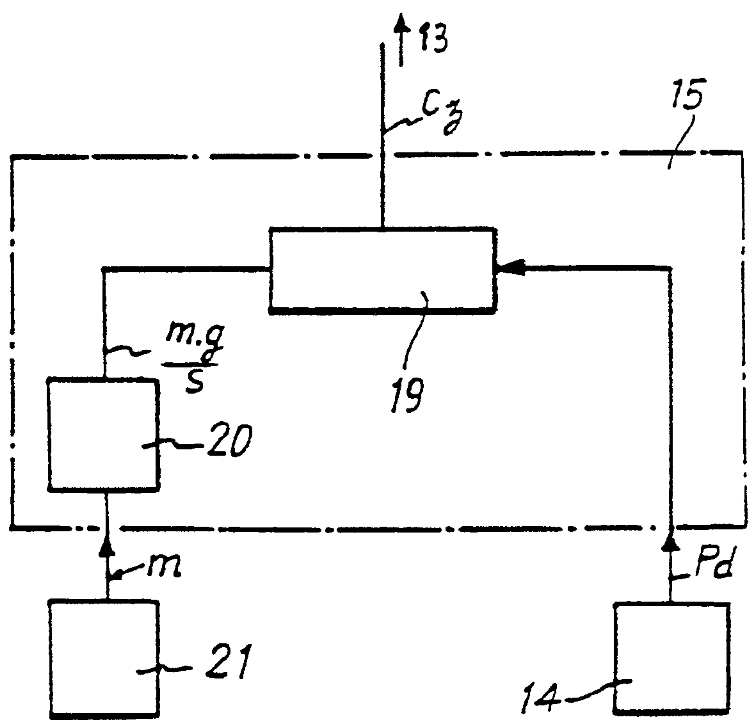

Fig. 3

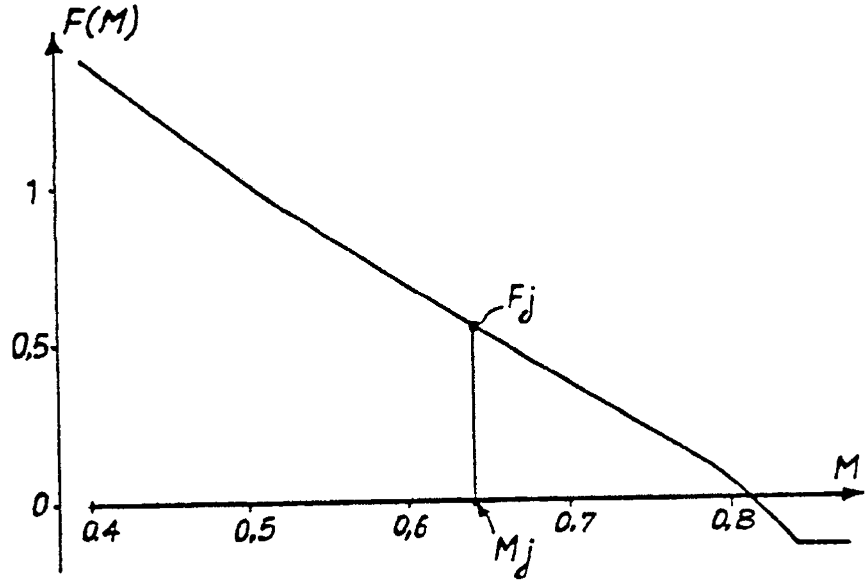


Fig. 4

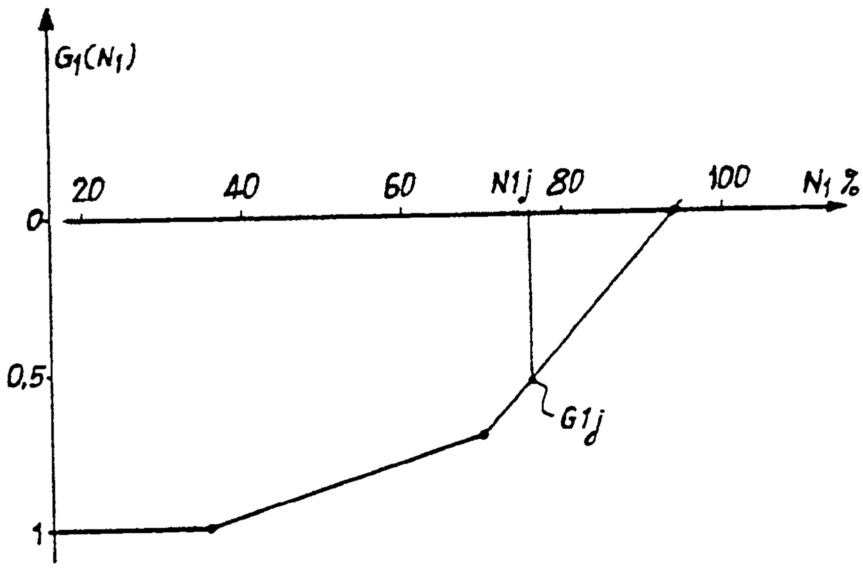


Fig. 5

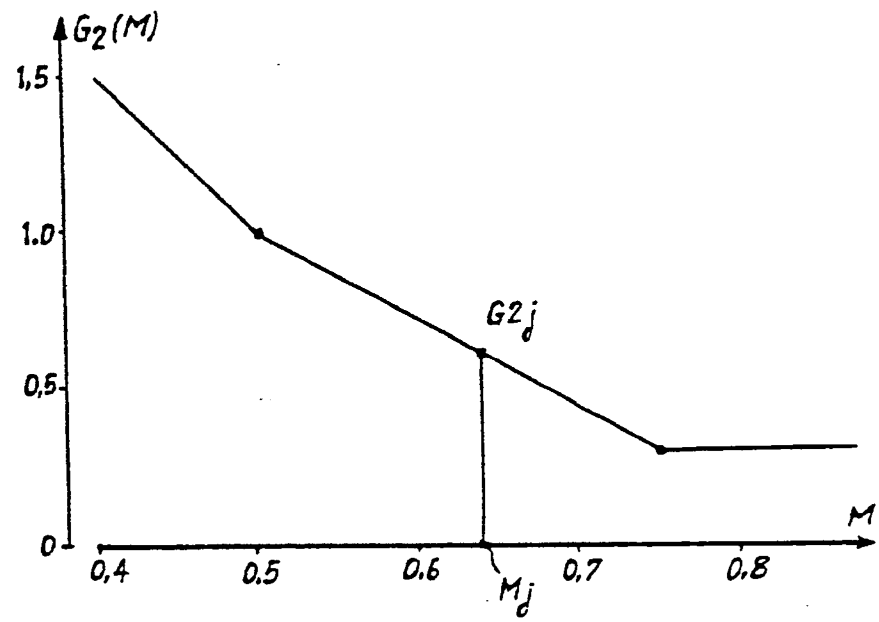

Fig:6

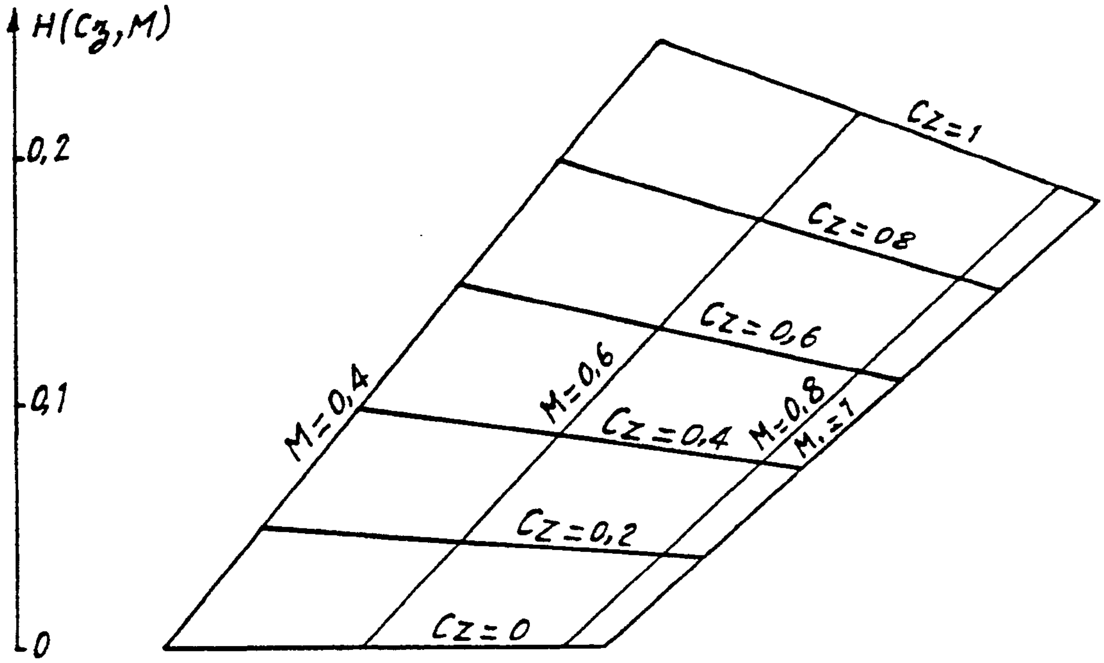
H(Cz,M)
0,2
0,1
0
Cz=1
Cz=08
Cz=0,6
Cz=0,4
Cz=0,2
Cz=0
M=0,4
M=0,6
M=0,8
M=1

Fig:8

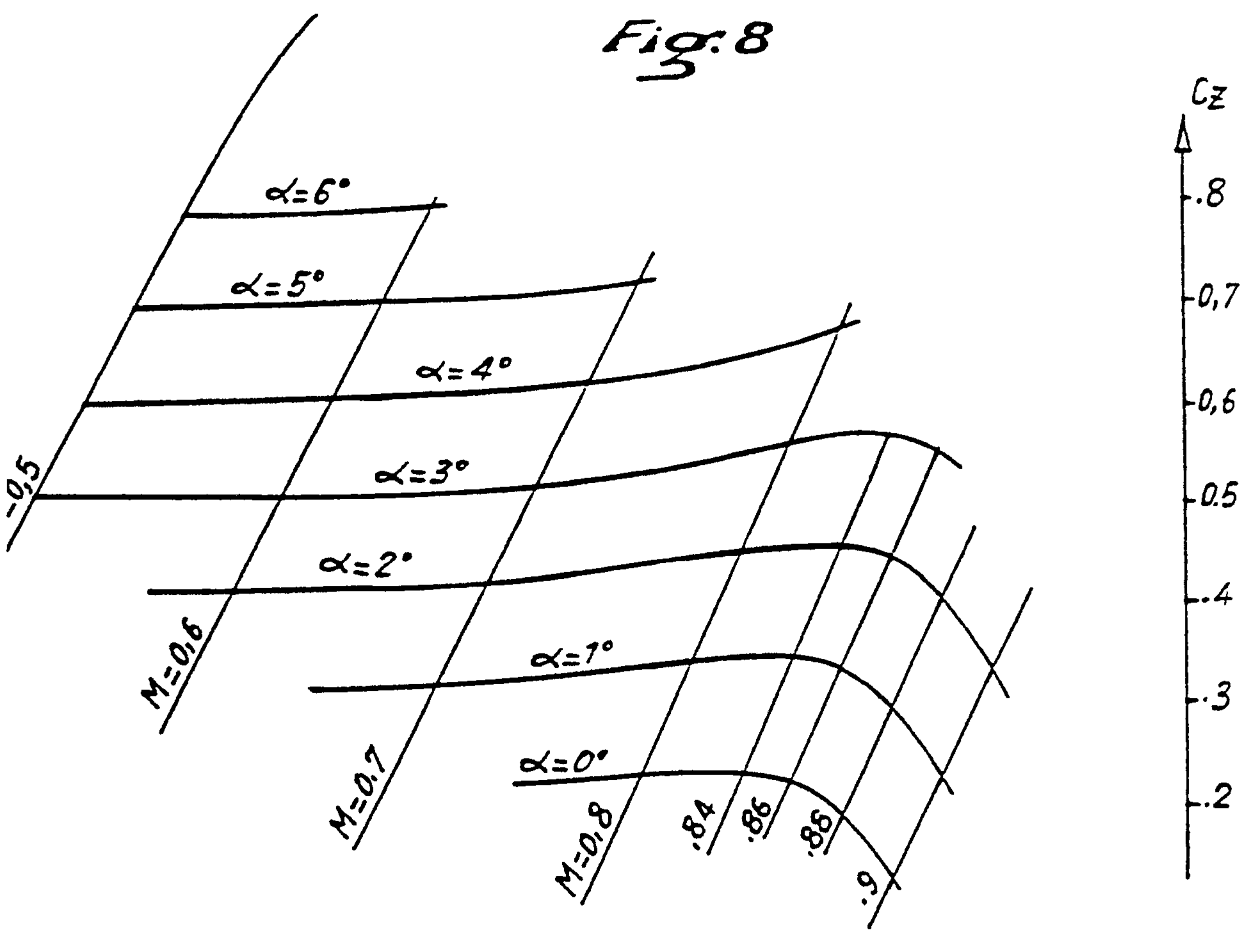
Cz
.8
0,7
0,6
0.5
.4
.3
.2
α=6°
α=5°
α=4°
α=3°
α=2°
α=1°
α=0°
-0,5
M=0,6
M=0,7
M=0,8
.84
.86
.88
.9